# EUROPEAN PATENT SPECIFICATION

(11) **EP 3 865 451 B1**
(45) Date of publication and mention of the grant of the patent: **02.04.2025**
(21) Application number: 21156559.3
(22) Date of filing: 11.02.2021
(51) Int. Cl.: B66F 7/28, B66F 9/06

(54) **A ROBOTIC GROUND CONVEYOR VEHICLE**
ROBOTERFLURFÖRDERFAHRZEUG
VÉHICULE DE MANUTENTION ROBOTISÉ

(30) Priority: 14.02.2020 SE 2050165
(43) Date of publication of application: 18.08.2021
(73) Proprietor: Toyota Material Handling Manufacturing Sweden AB, 595 81 Mjölby (SE)
(72) Inventor: MOLIN, Marcus, 585 91 LINKÖPING (SE); LARSSON, Henrik, 591 61 MOTALA (SE); ARVIDSSON KLINT, Jakob, 595 51 MJÖLBY (SE)
(74) Representative: Ström & Gulliksson AB

(56) References cited:
- CN-U- 208 963 204
- JP-A- H04 266 305
- JP-A- H11 116 006
- US-A- 4 267 780
- US-A- 4 972 782

## Description

### Technical field

The present disclosure relates a robotic ground conveyor vehicle for transporting pallets.

### Background art

The handling of goods in warehouses is becoming increasingly automated. Robotic ground conveyor vehicles are thereby typically used to transport load carrying pallets between stations in the warehouse. Such pallet carrying vehicles are known as automated mobile robots (AMR) or automated guided vehicles (AGV) and move autonomously on the floor of the warehouse. The vehicles may be guided by natural navigation, magnetic tracks or beacons in the warehouse and comprise a controller with instructions for controlling the movement of the vehicle. However, a general problem with known solutions is that there are few possibilities to transfer pallets to and from the carrying vehicle and therefore the transport flow in the warehouse is limited to particularly designed stations where the automated vehicle may leave or pick up pallets.

JPH11116006A relates to improving the efficiency of storing and retrieving articles from a warehouse and discloses automated guided in accordance with the pre-characterizing portion of appended claim 1. US4267780A discloses a device that is configured such that goods loaded onto the device may either be lifted together with the device, or may be lifted without the device. The device may be designed such that it may be picked up by the forks of a fork-lift truck from any of its four sides. US4972782A discloses an adaptor for attachment to a conventional pallet such that a load may be lifted without lifting the pallet. The adaptor may be designed such that the forks of a fork-lift truck may engage from any of its four sides. CN 208963204 U discloses a robotic pallet lifting device which makes use of scissor type lifting support surfaces which integrate within the lifting device in a transversely positioned manner.

It is an object of the present disclosure to provide a robotic ground conveyor vehicle which solves or at least mitigates at least one of the problems or drawbacks of the prior art.

In particular, it is an object of the present disclosure to provide a robotic ground conveyor vehicle which allows for flexible handling of goods.

### Summary of the invention

According to the present disclosure, at least one of these objects is achieved by a robotic ground conveyor vehicle for transporting pallets comprising,
- a loading surface with;
- a plurality of vertically adjustable load support members for supporting a pallet carried by the robotic ground conveyor vehicle, wherein that the load support members are arranged spaced apart on the loading surface and such that a pallet supported by the load support members may be engaged by forks of a forklift truck.

The robotic ground conveyor vehicle provides advantages in that the spaced apart load support members allows loads, e.g. pallets, carried by the robotic ground conveyor vehicle to be accessed by forks of forklift trucks at all times and in all situations during a transporting operation. For example, if a robotic ground conveyor vehicle according to the present disclosure malfunctions between loading stations, a forklift truck may access the pallet carried by the robotic ground conveyor vehicle, lift it away from the robotic ground conveyor vehicle and transport the pallet further down the transport chain. The robotic ground conveyor vehicle according to the present disclosure further provides flexibility in transporting operations because designated loading/unloading stations in form of shelves or the like for the robotic ground conveyor vehicles may be omitted in the warehouse. It suffices that the robotic ground conveyor vehicle carries its pallet to a designated area where a forklift truck may lift the pallet off the robotic ground conveyor vehicle and place the pallet onto another ground conveyor vehicle. Alternatively, the forklift-truck may carry the pallet further in the transporting operation.

**In** the robotic ground conveyor vehicle according to the present disclosure, the loading surface extends in a longitudinal direction between a front end and a rear end of the robotic ground conveyor vehicle. The front end may thereby define the forward driving direction of the robotic ground conveyor vehicle and the rear end the backward driving direction. The load support members are spaced apart in the longitudinal direction of the loading surface. This allows advantageously the forks of a forklift truck to engage the pallet carried by the robotic ground conveyor vehicle.

By "engage a pallet" is meant that the forks of a forklift truck may be inserted into pallet channels of the pallet or inserted underneath the pallet that is supported on the load support members and lift the pallet away from the load support members. The pallet may thereby include longitudinal pallet channels, and/or transverse pallet channels and/or the baseboards of a pallet. **In** dependency of the type of pallet, the underside of the pallet may be a planar surface.

According to an alternative of the robotic ground conveyor vehicle, the load support members are discrete elements configured to be received in pallet channels of a pallet carried by the robotic ground conveyor vehicle. This configuration allows for a reduced total height of the robotic ground conveyor vehicle and the pallet carried. It also provides for secure transportation of the pallet.

The load support members are arranged in at least two rows, wherein each row comprises at least two load support members. The load support members are spaced apart such that an opening is formed between at least two adjacent load support members of each row. The opening is configured to receive at least one fork of a fork-lift truck. This configuration allows for simple and straight forward access, for a forklift truck, to the transverse pallet channels of a pallet carried by the forklift truck. The pallet may easily by positioned such that the openings between the adjacent load support members of both rows coincide with the transverse pallet channels.

According to an alternative of the robotic ground conveyor vehicle according to the present disclosure, the load support members are elongate and extend parallel to each other between opposing sides of the loading surface. This configuration provides from high flexibility because a pallet placed onto the support members may be accessed from any of its sides by forks of a forklift truck.

**In** detail, the load support members may extend transverse to the longitudinal extension of the loading surface. This configuration provides for secure transportation of a pallet on the robotic ground conveyor vehicle. It may further allow access to the baseboards of a pallet by forks of a forklift truck.

**In** more detail, the load support members may be spaced apart such that an opening is formed between at least two adjacent load support members, wherein the opening is configured to receive one or two forks of a forklift truck. This allows for full access to a pallet carried by the robotic ground conveyor vehicle. A forklift truck may engage both the longitudinal and transverse pallet channels and the base boards of the pallet carried by the robotic ground conveyor vehicle. The opening may be at least 2/3 the dimension of the pallet that is to be supported by the load support members.

The load support members may comprise an elongate support portion for supporting the underside of a pallet and a central portion extending between the loading surface and the elongate support portion. This configuration is advantageous in operation with loading/unloading stations having shelves for pallets.

Typically, the support members may be configured to support the base boards or the backside of a pallet carried by the robotic ground conveyor vehicle.

The loading surface may be configured to receive a pallet. The loading surface may be shaped and dimensioned to receive a pallet. The loading surface may be rectangular. The dimension of the loading surface may be approximately 1200 x 800 mm or 800 x 600 mm.

The the loading surface may comprise support member openings for the load support members. Thereby the robotic ground conveyor vehicle may be advantageously compact in the vertical direction. The load support members may be vertically movable with respect to the loading surface.

### Brief description of the drawings

- Figure 1:: A robotic ground conveyor vehicle according to a first alternative in perspective view.
- Figure 2.: The robotic ground conveyor vehicle according to the first alternative in a front view.
- Figure 3:: The robotic ground conveyor vehicle according to the first alternative in side view.
- Figure 4:: A pallet and a loading/unloading station.
- Figure 5:: A robotic ground conveyor vehicle according to a second alternative.
- Figure 6:: A robotic ground conveyor vehicle according to the second alternative carrying a pallet.
- Figure 7:: Workflow in an unloading operation of a robotic ground conveyor vehicle according to the second alternative.
- Figure 8:: Schematic drawing of forks of a forklift truck accessing a pallet carried by a robotic ground conveyor vehicle according to the present disclosure.

### Detailed description of embodiments

The robotic ground conveyor vehicle according to the present disclosure will now be described more fully hereinafter. The robotic ground conveyor vehicle according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

In the following, the robotic ground conveyor vehicle will be referred to as the "robotic vehicle".

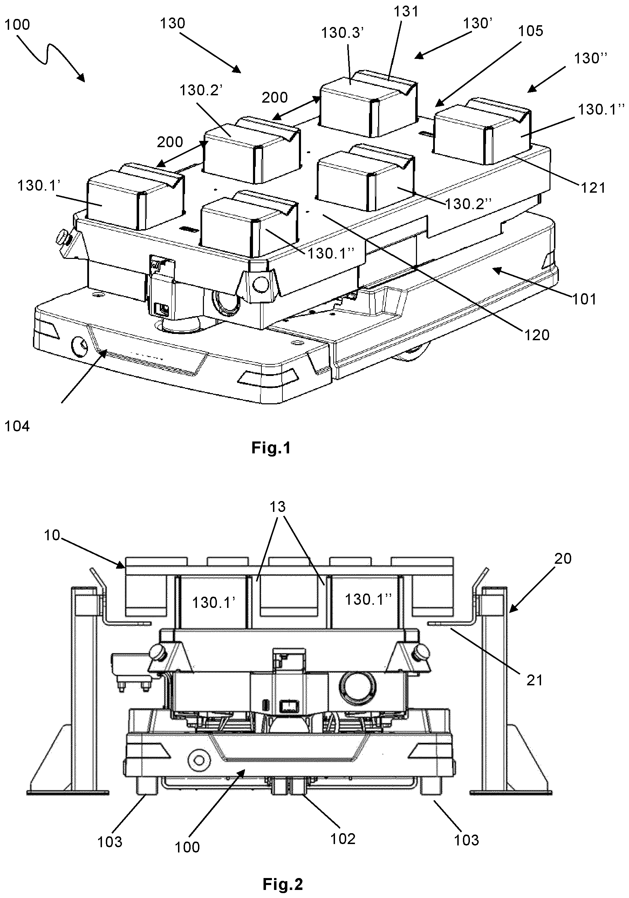

Figure 1 shows a robotic vehicle 100 for transporting pallets according to a first alternative of the present disclosure. The robotic vehicle 100 comprises a frame 101 which comprises a drive wheel 102 for propelling the robotic vehicle and support wheels 103 (see figure 2). The frame 101 further comprises several components for controlling the robotic vehicle. These components are not visible in the drawings and include: A motor, such as an electric motor, for driving the drive wheel; mechanical elements for steering the drive wheel: hydraulic systems and/or electrical motors for powering movable parts of the robotic vehicle; a controller for controlling the movement of the robotic vehicle. The controller may be implemented using instructions that enable hardware functionality, for example, by using executable computer program instructions in a general-purpose or special-purpose processor that may be stored on a computer readable storage medium (disk, memory etc.) to be executed by such a processor. The controller is configured to read instructions from the memory and execute these instructions to control the operation of the robotic vehicle including, but not being limited to, the propulsion, steering and movement of movable parts of the robotic vehicle. The controller may be implemented using any suitable, publically available processor or Programmable Logic Circuit (PLC). The memory may be implemented using any commonly known technology for computer-readable memories such as ROM, RAM, SRAM, DRAM, FLASH, DDR, SDRAM or some other memory technology. The frame 101 may further comprise sensors for detecting objects in the environment of the robotic vehicle or the presence of guiding or beacons which supports the navigation of the robotic vehicle.

The robotic vehicle 100 further comprises a loading surface 120 which is planar and elongated and extends in longitudinal direction over the frame 101 of the robotic vehicle between the front end 104 and the rear end 105 of the robotic vehicle. The front end 104 is the forward driving direction and the rear end 105 is backwards driving direction of the robotic vehicle 100.

The loading surface 120 is configured to receive a pallet 10. Pallets come in various shapes and dimensions, such as rectangular or square, and the loading surface may be designed and dimensioned accordingly.

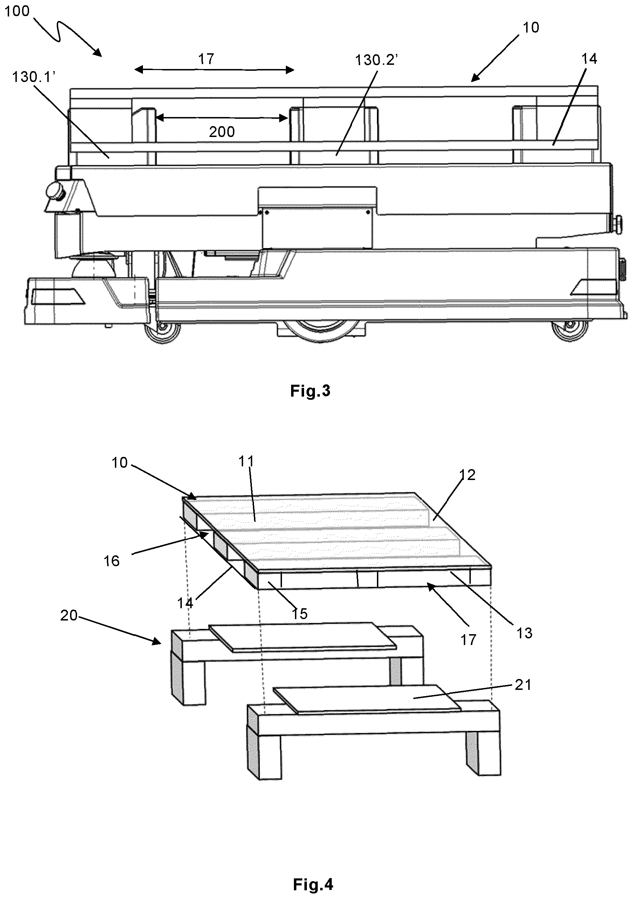

An example of a pallet 10 is shown in figure 4. Thus, the pallet 10 has a planar floor 11 with an upper side 12 onto which goods may be placed. The backside 13 of the planar floor 11 is located opposite to the upper side 12 and may be attached to base boards 14 by spacers 15 which separates the planar floor 11 from the base boards 14. The spacers 15 are arranged such that longitudinal pallet channels 16 are formed between first opposing ends of the pallet and/or such that transverse pallet channels 17 are formed through going between second opposing ends of the pallet. The longitudinal and/or transverse pallet channels may be dimensioned to receive load engagement elements, such as lifting forks of a lift truck. For example, a stacker lift-truck or reach lift-truck which are commercially available from the company Toyota Material Handling AB.

The backside 13 of the floor 11 and/or the longitudinal pallet channels 16, and/or the transverse pallet channels 17, and/or the base boards 14 constitute the underside of the pallet 10. Examples of pallets include CHEP-pallets and EUR-pallets. Some types of pallets may only comprise longitudinal or only transverse pallet channels. In certain cases the pallet may not have pallet channels but rather a mere planar backside 13.

Also shown in figure 4, is a loading/unloading station 20 with two shelves 21 that are configured to carry a pallet 10. The loading/unloading station 20 is dimensioned such that the robotic vehicle (not shown) may pass under the shelves 21 and leave a pallet 10 on the shelves 21 or remove a pallet from the shelves 21. This operation will be described further below in the description.

Returning to figure 1. The robotic vehicle 100 comprises a plurality of load support members 130 that are configured to support a pallet. By "plurality" is hereby meant two or more load support members 130. In the embodiment shown in figure 1, the load support members 130 are configured to be received in the longitudinal pallet channels 16 of a pallet 10 (not shown) that is to be carried by the robotic vehicle 100.

Figure 2 shows a front view of the robotic vehicle 100 and a pallet 10 that is supported on the load support members 130. Figure 2 further shows the loading/unloading station 20. The load support members 130 are movable in vertical direction, upward/downward, so that a pallet 13 may be lifted up from the shelves 21 of the loading/unloading station 20 by the robotic vehicle in a loading operation. Or, set down on the shelves 21 by the robotic vehicle 100 in an unloading operation. Movement of the load support members 130 may be realized by hydraulic piston/cylinder arrangements or electric motors in the robotic vehicle 100 (not shown). The load support members 130 may be configured to support the backside of the pallet 10 when received in the pallet channels 16, 17. The load support members 130 may thereby have an at least partly planar upper surface 131. The planar upper surface 131 may further be provided with a groove that allows the load support members 130 to support load cages or roller cage carriers, for example.

Returning to figure 1. According to the present disclosure, the load support members 130 are arranged spaced apart from each other on the loading surface 120 such that a pallet 10 that is carried by the load support members 130 may be engaged by the forks of lift-truck (not shown) and lifted away from the robotic vehicle. In the embodiment of figure 1, the load support members 130 are thereby arranged in two parallel rows 130' and 130" which extend in longitudinal direction of the loading surface 120 of the robotic vehicle 100. Row 130' comprises three spaced apart load support members 130.1', 130.2', 130.3'. Row 130" also comprises three spaced apart load support members 130.1", 130.2", 130.3". As shown, row 130' is spaced apart from row 130" in transverse direction on the loading surface 120 such that the load support members of row 130'and 130" may be received in a respective longitudinal pallet channel 13 of a pallet 10 carried by the robotic vehicle 100 (see figure 2). The load support members of rows 130', 130" are further spaced apart from each other in longitudinal direction on the loading surface 120 such that an opening 200 is formed between adjacent load support members 130.1', 130.2', 130.3' of row 130, and between load support members 130.1", 130.2", 130.3" of row 130". The opening 200 is sufficiently wide to receive a fork of a lift-truck. The openings 200 of row 130' are aligned with the openings 200 of row 130". This allows the forks of a forklift truck to be inserted through the openings 200 of both rows 130', 130".

Figure 3 shows a side view of the robotic vehicle 100 and a pallet 10 that is supported on the load support members 130 of the robotic vehicle. It is clearly visible that a pallet 10 may be supported onto the load support members 130 such that the transverse pallet channels 17 are aligned with the openings 200 between adjacent support members of rows 130' and 130''. Thus, a lift-truck (not shown) may insert the forks through the openings 200 and into the transverse pallet channels 17 and thereby lift the pallet 10 away from the robotic vehicle 100. In figure 3, the backside 11 of the pallet is supported onto the upper surface 131 of the load support members 130', 130".

As is clear from figures 1 to 3, the loading surface 120 comprises one support member opening 121 for each load support member 130. The load support members 130 are vertically movable with respect to the loading surface 120. The load support members 130 are vertically movable from a vertical position in which they are vertically aligned with or below the loading surface to a vertical position in which they protrude above the loading surface 120 to carry the pallet 10. In figures 1 to 3, the load support members 130 protrude through their respective support member openings 121.

In the shown embodiment, the robotic vehicle 100 comprises six load support members 130 which are arranged in two parallel rows with three load support members 130 in each row. However, it is possible to arrange two or more load support members 130 spaced apart on the loading surface 120 such that the forks of a lift-truck may access a pallet that is carried by the robotic vehicle 100. For example, the robotic vehicle may comprise four elements that for example are arranged in the corners of the loading surface. It is also possible to arrange eight load support members 130 that for example are arranged in two parallel rows which each comprises four individual support members. An advantage with many spaced apart load support members in comparison to few load support members is that the strain on the pallet is more evenly distributed. In accordance with the disclosed embodiment, these load support members may be arranged such that an opening is formed between adjacent support members and that this opening is sufficiently wide to receive one or two forks of a forklift truck.

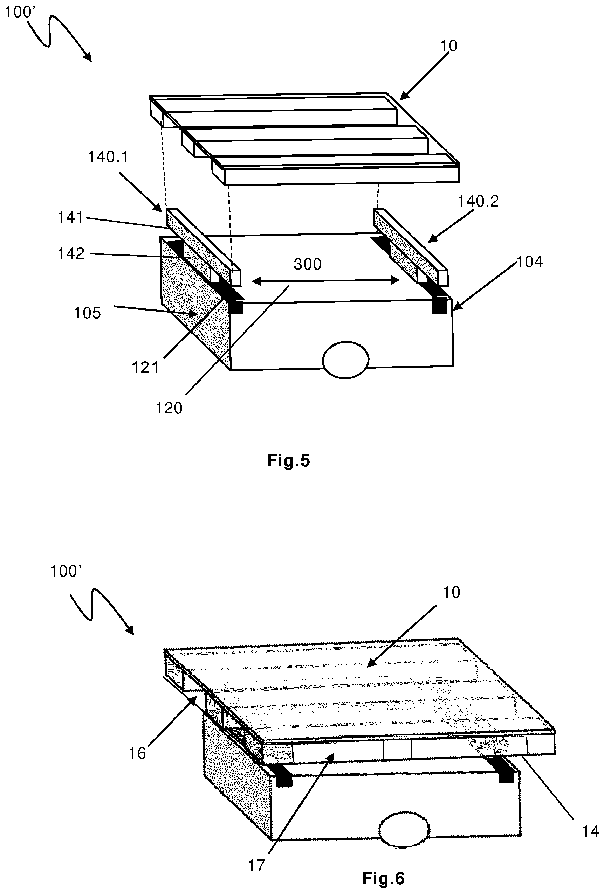

Figure 5 shows a second alternative of a robotic vehicle 100' according to the present disclosure. The robotic vehicle 100' according to the second alternative is to great extent identical with the robotic vehicle 100 according to the first alternative of the present disclosure. Therefore, in order to not unnecessarily burden the text, only differencing features are described hereinafter.

Thus, the robotic vehicle 100' comprises at least a first and a second load support member 140.1, 140.2 which are arranged spaced apart on the loading surface 120 of the robotic vehicle 100'. The first and second load support members 140.1, 140.2 are movable in vertical direction and configured to support a pallet 10 that is to be carried by the robotic vehicle 100'. As shown in figure 5, the load support members 140 are elongate and extend transverse over the loading surface 120 of the robotic vehicle 100. That is, transverse to the longitudinal extension of the loading surface 120. The upper surface of the respective load support member 140.1, 140.2 may be flat to allow a pallet to rest on the load support members in a stable and secure manner. Typically, the load support members 140.1, 140.2 extend between the opposing longitudinal sides of the loading surface 120. The length of the load support members 140.1, 140.2 may correspond to the transverse width of the pallet. For example, the length of the load support members 140.1, 140.2 may be greater than half the transverse width of the loading surface 120 or approximately equal to the width thereof. The load support members 140.1, 140.2 may be spaced apart, in the longitudinal extension of the loading surface 120, such that an opening 300 is formed between the load support members 140.1, 140.2. The distance between the load support members 140.1, 140.2 may thereby be selected in view of the pallets transported, such that a pallet may rest securely on the load support members 140.1, 140.2. **In** the present embodiment, the distance is selected such that the opening 300 corresponds to approximately 80 % the longitudinal length of the pallet, such that one load support member 140.1, 140 is arranged near each opposing longitudinal end of the pallet 10. The distance may further be selected such that the forks of a forklift truck may be received in the opening 300 between the load support members 140.1, 140.2 and engage the underside, e.g. the baseboards, of the pallet 10 when resting on the load support members 140.1, 140.2. It is possible to arrange three or more load support members 140 on the loading surface. An advantage thereof is a more evenly distributed strain on the pallet carried.

To facilitate a loading/unloading operation, the load support members may be yoke-shaped, thus comprising an elongate support portion 141 for supporting the underside of a pallet and a central portion 142 which extends from the elongate support portion 141 to the loading surface 120 of the robotic vehicle.

Figure 6 shows the robotic vehicle 100' in which a pallet 10 is supported onto the elongate support portion 141 of the respective load support members 140.1, 140.2. Thus, the baseboards 14 of the pallet 10 thereby rest on the supporting elements 140. In this configuration, the forks of a lift-truck may be received in the transverse pallet channels 17 or the longitudinal pallet channels 16 of the pallet and thereby engage the pallet. Alternatively, the forks of a lift-truck may be inserted underneath the baseboards 13 of the pallet 10 in the opening 300 between the load support members 140.1, 1402 (see figure 5) and thereby engage the pallet 10. Thereby, a great flexibility in loading/unloading operations is achieved.

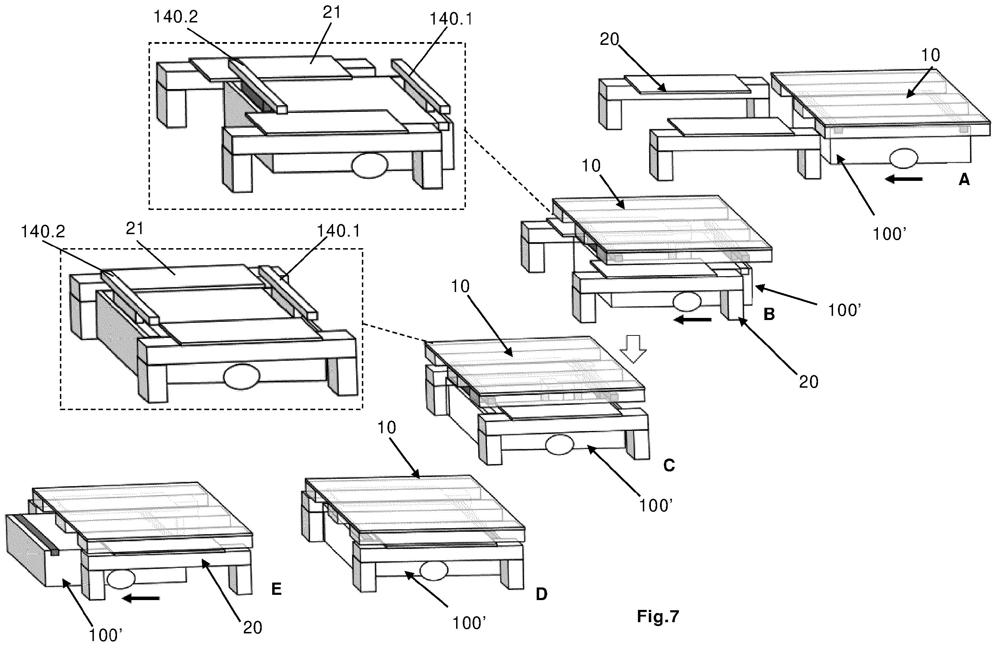

Figure 7 shows the steps of a transporting operation in which a pallet 10 is transported to a loading/unloading station by a robotic vehicle 100' according to the second alternative of the present disclosure. However, the steps described below are also valid for the robotic vehicle 100 according to the first alternative of the present disclosure. In figure 7, the dashed framed drawings show steps B and C without the pallet, for clarity.

As is clear from figures 5 to 7, the loading surface 120 comprises one support member opening 121 for each load support member 140. The load support members 140 are vertically movable with respect to the loading surface 120. The load support members 140 are vertically movable from a vertical position in which they are vertically aligned with or below the loading surface 120 to a vertical position in which they protrude above the loading surface 120 to carry the pallet 10.

Thus, in step A, the robotic vehicle 100 arrives at the loading/unloading station 20 with a pallet 10 supported on the loading surface 120.

In step B, the robotic vehicle 100 enters the loading/unloading station 20. Due to the yoke-shaped load support members 140.1, 140.2, the robotic vehicle 100' may pass underneath the shelves 21 of the loading/unloading station 20 while the pallet 10 is moved to a position above the shelves 21.

In step C, the robotic vehicle 100' is in a position in which the pallet 10 is above the shelves 21 and the load support members 140.1, 140.2 are clear from the shelves 21.

In step D, load support members 140.1, 140.2 are moved vertically downwards and the pallet 10 is placed onto the shelves 21 of the loading/unloading station 20.

In step E, the robotic vehicle 100' leaves the loading/unloading station 20.

In step 7B and step 7C, the load support members 140.1, 140.2 protrude through their respective support member openings. In steps 7A, 7D and 7E, the load support members 140.1, 140.2 are vertically aligned with the loading surface 120.

A main advantage by the robotic vehicle according to both the first and the second alternative of the present disclosure is that it provides great flexibility in the transporting operation of pallets. Thus, due to that the underside of a pallet on the robotic vehicle is accessible to the forks of a lift-truck it may be removed from the robotic vehicle, or placed onto the robotic vehicle, at any time during the transporting operation. For example, the pallet may be removed from the robotic vehicle before the robotic vehicle arrives at the loading/unloading station. In this context it would be possible to omit the loading/unloading station 20. A further example is when the robotic vehicle 100 would malfunction in the loading/unloading station 20. **In** this situation, a lift truck may remove the pallet 10 from the robotic vehicle 100' and transport it to its end station.

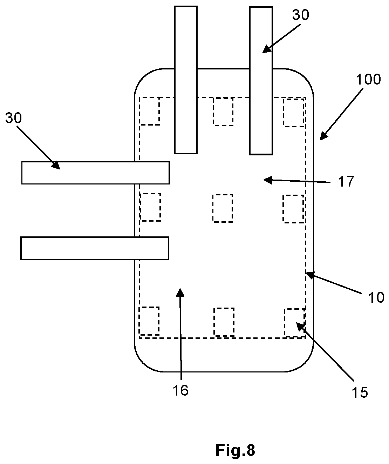

Figure 8 shows schematically the forks 30 of a forklift truck engaging the longitudinal and transverse pallet channels 16, 17 of a pallet 10 supported on a robotic vehicle 100' according to the second alternative of the present disclosure. However, figure 8 is also valid in view of the robotic vehicle 100 of the first alternative of the present disclosure. **In** that case, the transverse pallet channels 17 may be accessed by the forks of the forklift truck.

Although particular embodiments have been disclosed in detail this has been done for purpose of illustration only, and is not intended to be limiting. **In** particular, it is contemplated that possible to combine the described alternatives.

## Claims

1. A robotic ground conveyor vehicle (100, 100') for transporting pallets (10) comprising,
- a loading surface (120) with;
- a plurality of vertically adjustable load support members (130, 140) for supporting a pallet carried by the robotic ground conveyor vehicle, wherein the load support members (130, 140) are arranged spaced apart on the loading surface (120) and such that a pallet (10) supported by the load support members (130, 140) may be engaged by forks (20) of a forklift truck,
**characterised in that** the loading surface (120) extends in a longitudinal direction between a front end (104) and a rear end (105) of the robotic ground conveyor vehicle (100, 100'),
the load support members (130, 140) are spaced apart at least in the longitudinal direction of the loading surface (120),
the load support members (130) are arranged in at least two rows (130', 130"), wherein each row comprises at least two load support members (130.1', 130.2'; 130.1", 130.2"), and wherein the load support members (130) are spaced apart such that an opening (200) is formed between at least two adjacent load support members (130.1', 130.2'; 130.1", 130.2') of each row (130', 130"), wherein the opening (200) is configured to receive a fork (20) of a forklift truck.

2. The robotic ground conveyor vehicle (100) according to claim 1, wherein the load support members (130) are discrete elements configured to be received in pallet channels (16) of a pallet (10) carried by the robotic ground conveyor vehicle.

3. The robotic ground conveyor vehicle (100') according to claim 1 or 2, wherein the load support members (140) are elongate and extend parallel to each other between opposing sides of the loading surface (120).

4. The robotic ground conveyor vehicle (100') according to claim 3, wherein the load support members (140) extend transverse to the longitudinal extension of the loading surface (120).

5. The robotic ground conveyor vehicle (100') according to claim 3 or 4, wherein the load support members (140) are spaced apart such that an opening (300) is formed between at least two adjacent load support members (140.1, 140.2), wherein the opening (300) is configured to receive one or more forks (20) of a forklift truck.

6. The robotic ground conveyor vehicle (100') according to anyone of claims 3 to 5, wherein the load support members (140) comprises an elongate support portion (141) for supporting the underside of a pallet (10) and a central portion (142) extending between the loading surface (120) and the elongate support portion (142).

7. The robotic ground conveyor vehicle (100') according to anyone of claims 3 to 6, wherein the load support members (140) are configured to support the baseboards (14) or the backside (13) of a pallet (10) carried by the robotic ground conveyor vehicle (100').

8. The robotic ground conveyor vehicle (100') according to claim 7, wherein the opening (300) is at least 2/3 the dimension of the pallet (10) that is to be supported by the load support members (140).

9. The robotic ground conveyor vehicle (100, 100') according to any preceding claim, wherein the loading surface (120) is configured to receive a pallet (10).

10. The robotic ground conveyor vehicle (100, 100') according to claim 9, wherein the loading surface (120) is shaped and dimensioned to receive a pallet (10).

11. The robotic ground conveyor vehicle (100, 100') according to any preceding claim, wherein the loading surface (120) comprises support member openings (121) for the load support members (130, 140).

12. The robotic ground conveyor vehicle (100, 100') according to any preceding claim, wherein the load support members (130, 140) are vertically movable with respect to the loading surface (120).

## Patentansprüche

1. Roboter-Flurförderfahrzeug (100, 100') zum Transportieren von Paletten (10), umfassend,
- eine Ladefläche (120) mit;
- einer Vielzahl von vertikal einstellbaren Lastträgerelementen (130, 140) zum Tragen einer von dem Roboter-Flurförderfahrzeug getragenen Palette, wobei die Lastträgerelemente (130, 140) auf der Ladefläche (120) beabstandet und so angeordnet sind, dass eine von den Lastträgerelementen (130, 140) getragene Palette (10) von Gabeln (20) eines Gabelstaplers erfasst werden kann
**dadurch gekennzeichnet, dass**
sich die Ladefläche (120) in einer Längsrichtung zwischen einem vorderen Ende (104) und einem hinteren Ende (105) des Roboter-Flurförderfahrzeugs (100, 100') erstreckt,
die Lastträgerelemente (130, 140) zumindest in der Längsrichtung der Ladefläche (120) voneinander beabstandet sind,
die Lastträgerelemente (130) in mindestens zwei Reihen (130', 130") angeordnet sind, wobei jede Reihe mindestens zwei Lastträgerelemente (130.1', 130.2'; 130.1", 130. 2") umfasst, und wobei die Lastträgerelemente (130) so voneinander beabstandet sind, dass eine Öffnung (200) zwischen mindestens zwei benachbarten Lastträgerelementen (130.1', 130.2'; 130.1", 130.2') jeder Reihe (130', 130") gebildet wird, wobei die Öffnung (200) so konfiguriert ist, dass sie eine Gabel (20) eines Gabelstaplers aufnimmt.

2. Roboter-Flurförderfahrzeug (100) nach Anspruch 1, wobei es sich bei dem Lastträgerelement (130) um diskrete Elemente handelt, die so konfiguriert sind, dass sie in Palettenkanälen (16) einer von dem Roboter-Flurförderfahrzeug getragenen Palette (10) aufgenommen werden können.

3. Roboter-Flurförderfahrzeug (100') nach Anspruch 1 oder 2, wobei die Lastträgerelemente (140) länglich sind und sich parallel zueinander zwischen gegenüberliegenden Seiten der Ladefläche (120) erstrecken.

4. Roboter-Flurförderfahrzeug (100') nach Anspruch 3, wobei sich die Lastträgerelemente (140) quer zur Längserstreckung der Ladefläche (120) erstrecken.

5. Roboter-Flurförderfahrzeug (100') nach Anspruch 3 oder 4, wobei die Lastträgerelemente (140) so voneinander beabstandet sind, dass eine Öffnung (300) zwischen mindestens zwei benachbarten Lastträgerelementen (140.1, 140.2) gebildet wird, wobei die Öffnung (300) so konfiguriert ist, dass sie eine oder mehrere Gabeln (20) eines Gabelstaplers aufnehmen kann.

6. Roboter-Flurförderfahrzeug (100') nach einem der Ansprüche 3 bis 5, wobei die Lastträgerelemente (140) einen länglichen Tragabschnitt (141) zum Tragen der Unterseite einer Palette (10) und einen mittleren Abschnitt (142) umfassen, der sich zwischen der Ladefläche (120) und dem länglichen Tragabschnitt (142) erstreckt.

7. Roboter-Flurförderfahrzeug (100') nach einem der Ansprüche 3 bis 6, wobei die Lastträgerelemente (140) so konfiguriert sind, dass sie die Fußleisten (14) oder die Rückseite (13) einer von dem Roboter-Flurförderfahrzeug (100') getragenen Palette (10) tragen.

8. Roboter-Flurförderfahrzeug (100') nach Anspruch 7, wobei die Öffnung (300) mindestens 2/3 der Abmessung der Palette (10) beträgt, die von den Lastträgerelementen (140) getragen werden soll.

9. Roboter-Flurförderfahrzeug (100, 100') nach einem der vorhergehenden Ansprüche, wobei die Ladefläche (120) zur Aufnahme einer Palette (10) konfiguriert ist.

10. Roboter-Flurförderfahrzeug (100, 100') nach Anspruch 9, wobei die Ladefläche (120) zur Aufnahme einer Palette (10) geformt und dimensioniert ist.

11. Roboter-Flurförderfahrzeug (100, 100') nach einem der vorhergehenden Ansprüche, wobei die Ladefläche (120) Stützelementöffnungen (121) für die Lastträgerelemente (130, 140) aufweist.

12. Roboter-Flurförderfahrzeug (100, 100') nach einem der vorhergehenden Ansprüche, wobei die Lastträgerelemente (130, 140) in Bezug auf die Ladefläche (120) vertikal beweglich sind.

## Revendications

1. Véhicule robotique de transport au sol (100, 100') permettant de transporter des palettes (10) comprenant,
- une surface de chargement (120) avec ;
- une pluralité d'éléments de support de charge (130, 140) réglables verticalement permettant de supporter une palette portée par le véhicule robotique de transport au sol, dans lequel les éléments de support de charge (130, 140) sont agencés espacés sur la surface de chargement (120) et de sorte qu'une palette (10) supportée par les éléments de support de charge (130, 140) puisse être mise en prise par des fourches (20) d'un chariot élévateur à fourches,
**caractérisé en ce que** la surface de chargement (120) s'étend dans une direction longitudinale entre une extrémité avant (104) et une extrémité arrière (105) du véhicule robotique de transport au sol (100, 100'),
les éléments de support de charge (130, 140) sont espacés au moins dans la direction longitudinale de la surface de chargement (120),
les éléments de support de charge (130) sont agencés dans au moins deux rangées (130', 130"), dans lequel chaque rangée comprend au moins deux éléments de support de charge (130.1', 130.2' ; 130.1", 130.2"), et dans lequel les éléments de support de charge (130) sont espacés de sorte qu'une ouverture (200) soit formée entre au moins deux éléments de support de charge (130.1', 130.2' ; 130.1", 130.2") adjacents de chaque rangée (130', 130"), dans lequel l'ouverture (200) est configurée pour recevoir une fourche (20) d'un chariot élévateur à fourches.

2. Véhicule robotique de transport au sol (100) selon la revendication 1, dans lequel les éléments de support de charge (130) sont des éléments individuels configurés pour être reçus dans des canaux de palette (16) d'une palette (10) portée par le véhicule robotique de transport au sol.

3. Véhicule robotique de transport au sol (100') selon la revendication 1 ou 2, dans lequel les éléments de support de charge (140) sont allongés et s'étendent parallèlement l'un à l'autre entre des côtés opposés de la surface de chargement (120).

4. Véhicule robotique de transport au sol (100') selon la revendication 3, dans lequel les éléments de support de charge (140) s'étendent transversalement à l'extension longitudinale de la surface de chargement (120).

5. Véhicule robotique de transport au sol (100') selon la revendication 3 ou 4, dans lequel les éléments de support de charge (140) sont espacés de sorte qu'une ouverture (300) soit formée entre au moins deux éléments de support de charge (140.1, 140.2) adjacents, dans lequel l'ouverture (300) est configurée pour recevoir une ou deux fourches (20) d'un chariot élévateur à fourches.

6. Véhicule robotique de transport au sol (100') selon l'une quelconque des revendications 3 à 5, dans lequel les éléments de support de charge (140) comprend une partie de support allongée (141) permettant de supporter le côté de dessous d'une palette (10) et une partie centrale (142) s'étendant entre la surface de chargement (120) et la partie de support allongée (142).

7. Véhicule robotique de transport au sol (100') selon l'une quelconque des revendications 3 à 6, dans lequel les éléments de support de charge (140) sont configurés pour supporter les plinthes (14) ou le côté arrière (13) d'une palette (10) portée par le véhicule robotique de transport au sol (100').

8. Véhicule robotique de transport au sol (100') selon la revendication 7, dans lequel l'ouverture (300) représente au moins 2/3 de la dimension de la palette (10) qui doit être supportée par les éléments de support de charge (140).

9. Véhicule robotique de transport au sol (100, 100') selon une quelconque revendication précédente, dans lequel la surface de chargement (120) est configurée pour recevoir une palette (10).

10. Véhicule robotique de transport au sol (100, 100') selon la revendication 9, dans lequel la surface de chargement (120) est formée et dimensionnée pour recevoir une palette (10).

11. Véhicule robotique de transport au sol (100, 100') selon une quelconque revendication précédente, dans lequel la surface de chargement (120) comprend des ouvertures d'élément de support (121) pour les éléments de support de charge (130, 140).

12. Véhicule robotique de transport au sol (100, 100') selon une quelconque revendication précédente, dans lequel les éléments de support de charge (130, 140) sont mobiles verticalement par rapport à la surface de chargement (120).
